# EUROPÄISCHE PATENTANMELDUNG

(11) **EP 1 987 989 A2**
(43) Veröffentlichungstag der Anmeldung: **05.11.2008**
(21) Anmeldenummer: 08008518.6
(22) Anmeldetag: 06.05.2008
(51) Int. Cl.: B60R 9/04, B60R 9/052, B60R 9/058

(54) **Versenkbarer Dachgepäckträger**

(30) Priorität: 04.05.2007 DE 102007020917
(71) Anmelder: GM Global Technology Operations, Inc., Detroit MI 48265-3 (US)
(72) Erfinder: Dönicke, Daniel, 64646 Heppenheim (DE)
(74) Vertreter: Strauss, Peter

(57) **Zusammenfassung**

Ein Dach (1) weist in einem Dachkanal (2) einschwenkbare Stützelemente (8) eines Dachlastträgers (7) auf. Zur Benutzung des Dachlastträgers (7) lassen sich die Stützelemente (8) aus dem Dachkanal (2) heraus in eine über eine Außenhaut (11) des Daches (1) hervorstehende Stellung schwenken. An ihren freien Enden weisen die Stützelemente (8) Aufnahmemittel (16) zur Verbindung mit einem Querträger (9) des Dachlastträgers (7) auf. Im ungenutzten Zustand des Dachlastträgers (7) werden ausschließlich die Querträger (9) demontiert und in einer entsprechenden Aufnahme im Kraftfahrzeug mitgeführt.

## Beschreibung

Die Erfindung betrifft ein Dach für ein Kraftfahrzeug mit einer Dachaußenhaut und mit Stützelementen für einen Dachlastträger.

Ein solches Dach wird bei heutigen Kraftfahrzeugen häufig eingesetzt und ist aus der Praxis bekannt. Das aus der Praxis bekannte Dach weist eine in der Dachaußenhaut angeordnete Dachlastträgeröffnung auf, welche bei nicht montiertem Dachlastträger von einer Abdeckung verdeckt ist. Die Abdeckung lässt sich zur Seite schieben oder weg klappen. Unter der Abdeckung sind Haltemittel angeordnet, an welchen die Stützelemente des Dachlastträgers befestigt werden können.

Nachteilig bei dem bekannten Dach ist jedoch, dass der Dachlastträger bei Nichtgebrauch demontiert werden sollte, weil hierdurch die Aerodynamik und der Kraftstoffverbrauch des Kraftfahrzeuges ungünstig beeinflusst werden. Damit muss der Dachlastträger bei Nichtgebrauch gelagert werden, was aufwändig ist. Zudem ist der Dachlastträger nicht jederzeit verfügbar.

Der Erfindung liegt das Problem zugrunde, ein Dach der eingangs genannten Art so weiterzubilden, dass eine Einrichtung zum Tragen von Lasten auf dem Dach jederzeit verfügbar ist und bei einem Nichtgebrauch nicht zu einer Beeinträchtigung der Aerodynamik oder des Kraftstoffverbrauchs führt.

Dieses Problem wird erfindungsgemäß dadurch gelöst, dass die Stützelemente von einer im Dach versenkten Stellung, in der die Stützelemente unterhalb der von der Dachaußenhaut erzeugten Begrenzung des Daches angeordnet sind, in eine über die Dachaußenhaut hervorstehende Stellung bewegbar sind.

Durch diese Gestaltung sind die Stützelemente des Dachlastträgers integraler Bestandteil des erfindungsgemäßen Daches und damit jederzeit verfügbar. Zum Gebrauch des Dachlastträgers werden die Stützfüße einfach in die hervorstehende Stellung bewegt. Da die Stützelemente jedoch bei Nichtgebrauch des Dachlastträgers einfach in die versenkte Stellung bewegt werden können, wird die Beeinträchtigung der Aerodynamik oder des Kraftstoffverbrauchs zuverlässig vermieden.

Der Platzbedarf der Stützelemente lässt sich gemäß einer anderen vorteilhaften Weiterbildung der Erfindung besonders gering halten, wenn die Stützelemente teleskopartig verschiebbar in vertikalen Säulen des Daches geführt sind. Da die vertikalen, häufig als A, B und C-Säulen bezeichneten Säulen in der Regel hohl sind, ist für die Stützelemente kein zusätzlicher Bauraum erforderlich. In der im Dach versenkten Stellung erhöhen die Stützelemente zudem die Stabilität der vertikalen Säulen in ihren an das Dach angrenzenden Bereichen.

Das erfindungsgemäße Dach gestaltet sich konstruktiv besonders einfach, wenn die Stützelemente in dem Dach schwenkbar gelagert sind.

Die in der versenkten Stellung befindlichen Stützelemente sind gemäß einer anderen vorteilhaften Weiterbildung der Erfindung besonders einfach zugänglich, wenn die Stützelemente in einen längs der Fahrtrichtung des Kraftfahrzeuges weisenden Dachkanal einschwenkbar sind.

Störende Unebenheiten am erfindungsgemäßen Dach lassen sich einfach vermeiden, wenn das Dach oder die Stützelemente in der im Dach versenkten Stellung eine bündig mit der Dachaußenhaut abschließende Blende aufweisen. Durch diese Gestaltung wird eine Beeinträchtigung der Aerodynamik durch die in der versenkten Stellung befindlichen Stützelemente zuverlässig vermieden. Eine Beschädigung der Blende beim Transportieren von Lasten wird vermieden, wenn das Dach die Blende aufweist.

An den Stützelementen lassen sich gemäß einer anderen vorteilhaften Weiterbildung der Erfindung verschiedene Typen von Dachlastträgern anordnen, wenn die freien, in der hervorstehenden Stellung von der Dachaußenhaut abstehenden Enden der Stützelemente Aufnahmemittel zur Verbindung mit einem quer zur Fahrtrichtung des Kraftfahrzeuges angeordnetem Querträger des Dachlastträgers aufweisen. Ein weiterer Vorteil dieser Gestaltung besteht darin, dass Ausnehmungen in der Dachaußenhaut für den Dachlastträger sehr klein sein können, da der Querträger separat an den in der hervorstehenden Stellung befindlichen Stützelementen befestigt wird. Da die Querträger von Dachlastträgern in der Regel lang gestreckte und gerade Bauteile sind, können sie platzsparend an entsprechenden Haltern im Kraftfahrzeug mitgeführt werden. Vorzugsweise sind die Querträger über werkzeuglos zu lösende Rastmittel mit den Stützelementen verbunden.

Eine nachträgliche Montage eines Querträgers lässt sich gemäß einer anderen vorteilhaften Weiterbildung der Erfindung einfach vermeiden, wenn die Stützelemente mit einem Querträger verbunden sind und wenn der Querträger in der versenkten Stellung der Stützelemente in dem Dach versenkt ist. Durch diese Gestaltung wird der gesamte Dachlastträger bei Bedarf aus der versenkten Stellung in die hervorstehende Stellung bewegt. In der versenkten Stellung tragen die Querträger zu einer Versteifung des erfindungsgemäßen Daches bei.

Die Bewegung der Stützfüße von der versenkten Stellung in die hervorstehende Stellung gestaltet sich gemäß einer anderen vorteilhaften Weiterbildung der Erfindung besonders komfortabel, wenn die Stützelemente mittels eines Aktuators verfahrbar sind und wenn der Aktuator mittels eines Bedienelementes ansteuerbar ist. Solche Aktuatoren können beispielsweise einen Elektromotor oder einen Hydraulikmotor aufweisen und von einer Taste manuell angesteuert werden. Alternativ dazu kann auch der Aktuator als Federelement ausgebildet sein und die Stützelemente in die hervorstehende Stellung vorspannen. In der versenkten Stellung können die Stützelemente dann mittels einer manuell lösbaren Rastverbindung gehalten sein.

Die Abstützung des Dachlastträgers gestaltet sich gemäß einer anderen vorteilhaften Weiterbildung der Erfindung besonders komfortabel, wenn die Stützelemente Rastelemente oder Anschlagmittel zur Abstützung in ihrer hervorstehenden Stellung haben.

Die Erfindung lässt verschiedene Ausführungsformen zu. Zur weiteren Verdeutlichung ihres Grundprinzips sind mehrere davon in der Zeichnung dargestellt und werden nachfolgend beschrieben. Die Zeichnung zeigt in
- Fig. 1: ein erfindungsgemäßes Dach eines Kraftfahrzeuges,
- Fig. 1a: das erfindungsgemäße Dach des Kraftfahrzeuges aus Figur 1 mit einem Dachlastträger,
- Fig. 2: stark vergrößert eine schematische Schnittdarstellung durch das erfindungsgemäße Dach des Kraftfahrzeuges aus Figur 1 entlang der Linie II - II mit einem Stützelement,
- Fig. 3: einen Teilbereich des erfindungsgemäßen Daches aus Figur 1 mit montiertem Dachlastträger,
- Fig. 4: stark vergrößert eine schematische Schnittdarstellung durch das erfindungsgemäße Dach des Kraftfahrzeuges aus Figur 1 entlang einer Säule des Daches,
- Fig. 5: einen Teilbereich des erfindungsgemäßen Daches aus Figur 4 mit montiertem Dachlastträger.

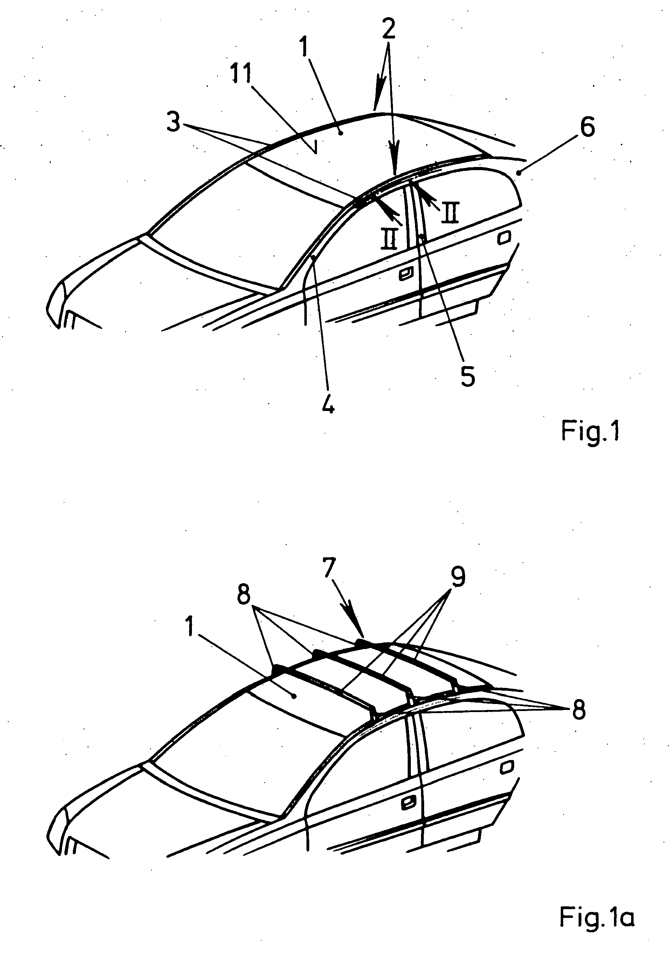

Figur 1 zeigt einen Teilbereich eines Kraftfahrzeuges mit einem Dach 1 und mit zwei sich seitlich in Fahrrichtung erstreckenden Dachkanälen 2. Die Dachkanäle 2 sind von einer Abdeckleiste 3 verdeckt. Das Dach 1 ist über mehrere vertikale Säulen 4 an übrige Bereiche einer Kraftfahrzeugkarosserie angebunden. Figur 1a zeigt das Dach 1 aus Figur 1 mit einem Dachlastträger 7. Der Dachlastträger 7 weist mehrere an dem Dach 1 angeordnete Stützelemente 8 auf. Jeweils zwei Stützelemente 8 sind über einen Querträger 9 miteinander verbunden.

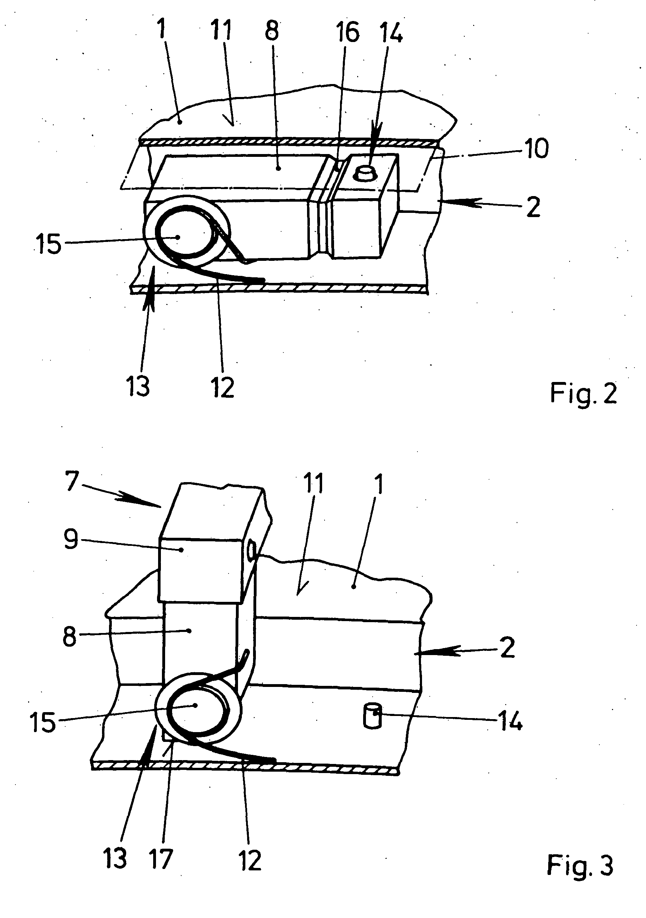

Figur 2 zeigt stark vergrößert in einer Schnittdarstellung durch einen Teilbereich einer der Dachkanäle 2 aus Figur 1, dass das Dach 1 eine bewegliche Blende 10 aufweist. Unter der Blende 10 ist eines der in Figur 1a dargestellten Stützelemente 8 des Dachlastträgers 7 schwenkbar gelagert. Die Blende 10 schließt bündig mit einer Außenhaut 11 des Daches 1 ab und verdeckt das in den Dachkanal 2 eingeschwenkte Stützelement 8. Das Stützelement 8 wird von einem ein Federerelement 12 aufweisenden Aktuator 13 gegen den Uhrzeigersinn vorgespannt und von einem im Dachkanal 2 angeordneten Rastelement 14 in seiner Lage gehalten. An seinem einer Lagerung 15 abgewandten Ende hat das Stützelement 8 Aufnahmemittel 16 zur Verbindung mit dem Querträger 9 des Dachlastträgers 7. Nach dem Lösen des Rastelementes 14 wird das Stützelement 8 von der Kraft des Federelementes 12 gegen den Uhrzeigesinn in eine hervorstehende Stellung verschwenkt.

In Figur 3 ist das Stützelement 8 in der über die Dachaußenhaut 11 hervorstehenden Stellung dargestellt. In dieser Stellung wird das Stützelement 8 von Anschlagmitteln 17 abgestützt und der Querträger 9 kann auf dem freien Ende des Stützelementes 8 an den Aufnahmemitteln 16 verrastet werden. Der Querträger 9 verbindet zwei auf einander gegenüberliegenden Längsseiten des Daches 1 angeordnete Stützelemente 8. Auf den Querträgern 9 des Dachlastträgers 7 lassen sich Lasten anordnen und transportieren. Wenn der Dachlastträger 7 nicht benötigt wird, werden die Querträger 9 demontiert und an einem entsprechenden Halter im Kraftfahrzeug verstaut. Die Stützelemente 8 lassen sich in die Dachkanäle 2 zurückschwenken, wie es in Figur 2 dargestellt ist und die Blende 10 über die Stützelemente 8 bewegen.

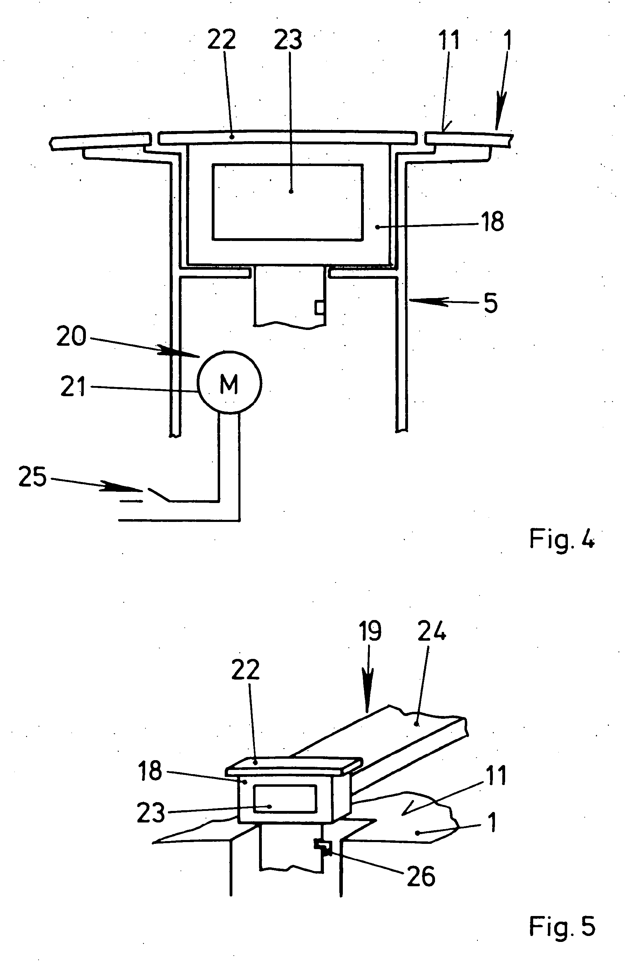

Figur 4 zeigt eine weitere Ausführungsform des in Figur 1 dargestellten Daches 1 in einem Längsschnitt entlang einer mittleren Säule 5. In der mittleren Säule 5 ist ein Stützelement 18 eines in Figur 5 teilweise dargestellten Dachlastträgers 19 von einem Aktuator 20 mit einem Elektromotor 21 vertikal verfahrbar angeordnet. Das Stützelement 18 trägt an seinem freien Ende eine bündig mit der Dachaußenhaut 11 abschließende Blende 22 und hat Aufnahmemittel 23 zur Verbindung mit einem in Figur 5 dargestellten Querträger 24. Der Elektromotor 21 lässt sich über ein Bedienelement 25 ansteuern und damit das Stützelement 18 von der in Figur 4 dargestellten versenkten Stellung in eine in Figur 5 dargestellte über die Dachaußenhaut 11 hervorstehende Stellung verfahren. In der hervorstehenden Stellung wird das Stützelement 18 von einem Rastmittel 26 gehalten. Ansonsten ist der Dachlastträger 19 wie der aus Figur 1a aufgebaut.

## Patentansprüche

1. Dach (1) für ein Kraftfahrzeug mit einer Dachaußenhaut (11) und mit Stützelementen (8, 18) für einen Dachlastträger (7, 19), **dadurch gekennzeichnet, dass** die Stützelemente (8, 18) von einer im Dach (1) versenkten Stellung, in der die Stützelemente (8, 18) unterhalb der von der Dachaußenhaut (11) erzeugten Begrenzung des Daches (1) angeordnet sind, in eine über die Dachaußenhaut (11) hervorstehende Stellung bewegbar sind.

2. Dach nach Anspruch 1, **dadurch gekennzeichnet, dass** die Stützelemente (18) teleskopartig verschiebbar in vertikalen Säulen (4 - 6) des Daches (1) geführt sind.

3. Dach nach Anspruch 1, **dadurch gekennzeichnet, dass** die Stützelemente (8) in dem Dach (1) schwenkbar gelagert sind.

4. Dach nach Anspruch 3, **dadurch gekennzeichnet, dass** die Stützelemente (8) in einen längs der Fahrtrichtung des Kraftfahrzeuges weisenden Dachkanal (2) einschwenkbar sind.

5. Dach nach einem der vorhergehenden Ansprüche, **dadurch gekennzeichnet, dass** das Dach (1) oder die Stützelemente (8, 18) in der im Dach (1) versenkten Stellung eine bündig mit der Dachaußenhaut (11) abschließende Blende (10, 22) aufweisen.

6. Dach nach einem der vorhergehenden Ansprüche, **dadurch gekennzeichnet, dass** die freien, in der hervorstehenden Stellung von der Dachaußenhaut (11) abstehenden Enden der Stützelemente (8, 18) Aufnahmemittel (17, 23) zur Verbindung mit einem quer zur Fahrtrichtung des Kraftfahrzeuges angeordnete Querträger (9, 24) des Dachlastträgers (7, 19) aufweisen.

7. Dach nach Anspruch 6, **dadurch gekennzeichnet, dass** die Stützelemente (8, 18) mit einem Querträger (9, 24) verbunden sind und dass der Querträger (9, 24) in der versenkten Stellung der Stützelemente (8, 18) in dem Dach (1) versenkt ist.

8. Dach nach einem der vorhergehenden Ansprüche, **dadurch gekennzeichnet, dass** die Stützelemente (8, 18) mittels eines Aktuators (13, 20) verfahrbar sind und dass der Aktuator (13, 20) mittels eines Bedienelementes (25) ansteuerbar ist.

9. Dach nach einem der vorhergehenden Ansprüche, **dadurch gekennzeichnet, dass** die Stützelemente (8, 18) Rastelemente (26) oder Anschlagmittel (17) zur Abstützung in ihrer hervorstehenden Stellung haben.
